# EUROPEAN PATENT SPECIFICATION

(11) **EP 1 216 815 B1**
(45) Date of publication and mention of the grant of the patent: **15.03.2006**
(21) Application number: 01310578.8
(22) Date of filing: 18.12.2001
(51) Int. Cl.: B29D 30/30, B29D 30/58, B29D 30/60, B29D 30/72

(54) **Method of making an annular rubber component of a tyre, and tyre comprising such a component**
Verfahren zur Herstellung einer ringförmigen Gummikomponente für einen Luftreifen, sowie Luftreifen enthaltend eine dergestalte Komponente
Procédé de fabrication d'un élément annulaire en caoutchouc pour pneumatique, et pneumatique comportant un tel élément

(30) Priority: 21.12.2000 JP 2000389281
(43) Date of publication of application: 26.06.2002
(73) Proprietor: SUMITOMO RUBBER INDUSTRIES LIMITED, Kobe-shi, Hyogo-ken (JP)
(72) Inventor: Suzuki, Kazuya, c/o Sumitomo Rubber Industries Ltd, Kobe-shi, Hyogo-ken (JP)
(74) Representative: Manitz, Finsterwald & Partner GbR

(56) References cited:
- EP-A- 0 459 507
- EP-A- 0 873 852
- EP-A- 1 016 555
- EP-A- 1 033 218
- EP-A- 1 033 236

## Description

The present invention relates to a method of making an annular rubber component of a tyre such as tread rubber, sidewall rubber, bead apex rubber and the like.

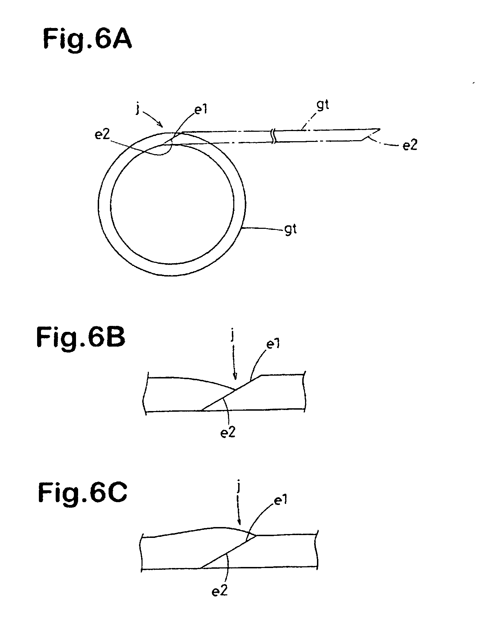

In general, a pneumatic tyre has a tread portion formed by winding a strip (gt) of a tread rubber compound around a tyre building drum as shown in Fig.6A. The tread rubber strip (gt) is extruded from a tread extruder and cut into a predetermined length by a tread skiver. The ends (e1 and e2) are butt-jointed in one position and one joint j is formed.

As the tread rubber strip (gt) is not yet vulcanised, it is easily elongated or compressed in the longitudinal direction. Thus, if the strip length is shorter than the winding length, a joint dent is liable to occur as shown in Fig.6B. If the strip length is longer than the winding length, a joint bulge is liable to occur as shown in Fig.6C. In either case, not only does the tyre uniformity especially RFV becomes worse, also the strength tends to decrease at the joint (j). If the strength is not enough, a so called open tread joint (OTJ), where the joint is broken is liable to occur in use of the tyre as wear of the tread rubber progresses.

The sidewall rubber in the tyre sidewall portions also may involve the same problems, namely, joint dent and joint bulge.

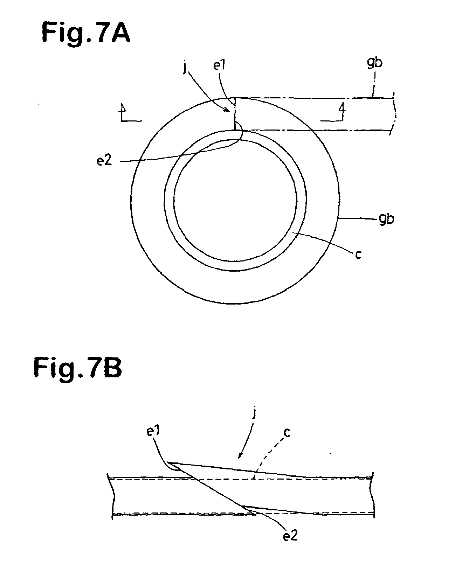

In the case of a bead apex, as shown in Figs.7A and 7B, an extruded strip (gb) of a bead apex rubber compound is applied in advance onto the radially outer side of an annular bead core (c). Here again the cut ends e1 and e2 are butt-jointed in one position (j).

As the bead apex rubber strip (gb) tapers radially outwards, the size is not so small in the radial direction, but in the tyre axial direction, it becomes very small towards the radially outer end thereof. Therefore, as shown in Fig.7B, even if slippage between the ends e1 and e2 is absolutely small, it is not relatively small. As a result, adhesive failure is liable to occur.

EP 1 033 236 A2 discloses an apparatus for making rubber component parts comprising a tape maker for making an unvulcanised rubber tape which comprises an extruder for extruding unvulcanised rubber, a winding drum around which the unvulcanised rubber tape is wound into a rubber component part, a conveyor for conveying the unvulcanised rubber tape toward the winding drum which comprises a conveyor belt winding around rollers and having a right side on which the unvulcanised rubber tape is put, and a traverser for moving the conveyor belt in the axial direction of the winding drum.

It is therefore, an object of the present invention to provide a method of making an annular tyre rubber component, by which a dent, bulge, slippage and resultant strength decrease, uniformity deterioration and the like in the joint can be prevented.

This object is achieved for a method by the features of claim 1 and for a pneumatic tire by the features of claim 7 respectively.

Embodiments of the present invention will now be described in detail in conjunction with the accompanying drawings, in which:
Fig.1 is a cross sectional view of a pneumatic tyre according to the present invention;
Figs.2A and 2B are diagrams for explaining a method of making a tyre rubber component;
Fig.3A is a cross sectional view of an tread rubber strip taken along the widthwise direction thereof;
Fig.3B is a cross sectional view thereof taken along the longitudinal direction thereof;
Fig.4A is a cross sectional view of a sidewall rubber strip taken along the widthwise direction thereof;
Fig.4B is a cross sectional view thereof taken along the longitudinal direction thereof;
Fig.5A is a cross sectional view of a bead apex rubber strip taken along the widthwise direction thereof;
Fig.5B is a cross sectional view thereof taken along the longitudinal direction thereof;
Fig.6A is a diagram showing the conventional tread rubber strip;
Figs.6B and 6C are diagrams showing a joint dent and a joint bulge by the conventional tread rubber strip, respectively;
Fig.7A is a diagram showing the conventional bead apex rubber strip; and
Fig.7B is a diagram showing a joint slippage in the conventional bead apex rubber strip.

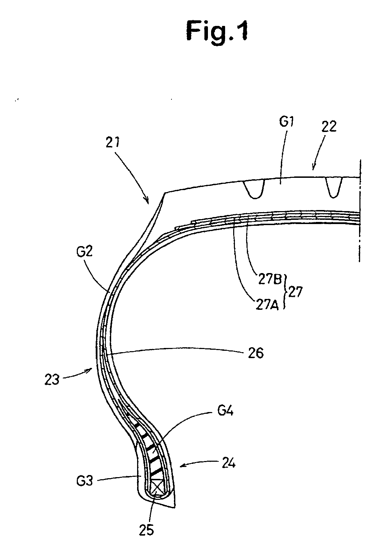

In Fig.1, a pneumatic tyre 21 according to the present invention comprises a tread portion 22, a pair of sidewall portions 23, a pair of axially spaced bead portions 24 each with a bead core 25 therein, a carcass 26 extending between the bead portions 24, and a belt 27 disposed radially outside the carcass 26 in the tread portion 22.

The carcass 26 comprises at least one ply of cords extending between the bead portions 24 through the tread portion 22 and sidewall portions 23, and turned up around the bead core 25 in each bead portion 24 to be secured thereto.

The belt 27 includes two crossed breaker plies 27A and 27B and optionally a band ply (not provided in this example).

In the tread portion 22, a tread rubber G1 is disposed radially outside the belt 27. In the sidewall portion 23, a sidewall rubber G2 is disposed axially outside the carcass 26. In the bead portion 24, a bead rubber or clinch rubber G3 is disposed along the axially outer face and bottom face of the bead portion. Between a carcass ply turnup and carcass ply main, a bead apex rubber G4 is disposed. On the inside of the carcass, a gas-impermeable inner liner rubber is disposed covering the inside of the tyre. If a gas-impermeable rubber compound is used as the carcass topping rubber, the inner liner rubber may be omitted.

Such a pneumatic tyre 21 may be formed as follows:
winding a thin inner liner rubber sheet on a cylindrical surface of a tyre building drum to make the inner liner rubber;
winding a bead rubber strip to make the bead rubber G3 on each side of the inner liner rubber;
winding a sidewall rubber strip to make the sidewall rubber G2 on the axially outside of each bead rubber G3;
winding a rubberised unwoven cord fabric to make the carcass 26 on these rubbers around the cylindrical tyre building drum;
placing the bead cores 25 with the bead apex rubber G4 wound therealong on the carcass 26;
changing the assembly of the above-mentioned wound components from the cylindrical shape to a toroidal shape while folding around the bead cores 25;
making a tread assembly of the belt and the tread rubber by winding strips of rubberised belt cords on another drum and winding a tread rubber strip thereon;
putting the annular tread assembly on the crown portion of the toroidal carcass; and
vulcanising the green tyre in a mould.

This method is typical but only an example. Other methods are also possible.

As explained above, a tyre rubber component G such as the tread rubber G1, sidewall rubber G2, bead apex rubber G4 and the like is formed by winding an unvulcanised rubber strip directly or indirectly on a drum.

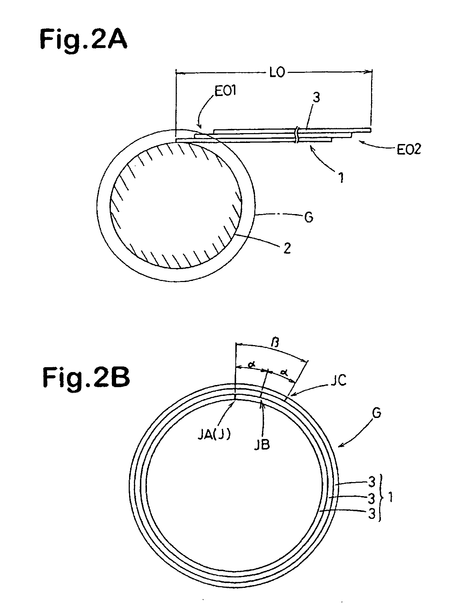

According to the present invention, as the above-mentioned unvulcanised rubber strip to be wound, a layered structure 1 of a plurality of thin unvulcanised rubber strips 3 is used. Thus, as shown in Fig.2A and Fig.2B, where a tyre rubber component G is formed by winding a layered structure 1 around a drum 2. Then, the circumferential ends E01 and E02 thereof are butt jointed.

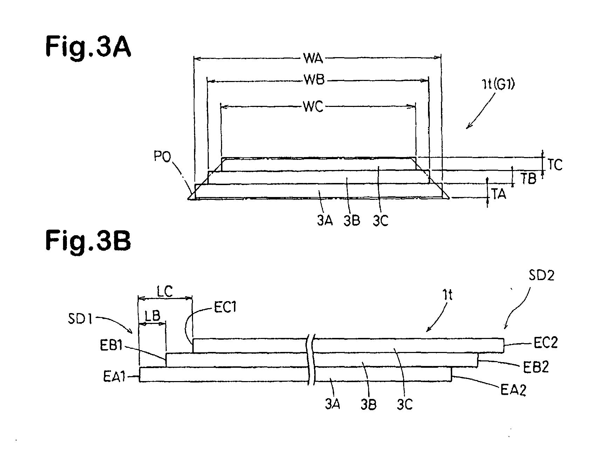

Fig.3A and Fig.3B show a layered structure It wound into the tread rubber G1. The layered structure 1t is made up of three layers of unwlcanised rubber strips 3A, 3B and 3C disposed in this order from the radially inside to outside. The widths WA, WB and WC of the unvulcanised rubber strips 3A, 3B and 3C are gradually decreased from the radially inside to the outside (WA > WB > WC) in order to make the cross sectional shape of the layered structure 1 t close to a trapezoid P0. According to the cross sectional shape required for the tread rubber, the widths WA, WB and WC can be set in another arrangement, for example, WA=WB=WC.

The unvulcanised rubber strips 3A, 3B and 3C have circumferential ends EA1, EB1 and EC1 on one step end SD1 and circumferential ends EA2, EB2 and EC2 on the other step end SD2, respectively. As shown in Fig.3B, the ends EA1, EB1 and EC1 on the step end SD1 are gradually shifted towards the step end SD2, and the ends EA2, EB2 and EC2 on the step end SD2 are gradually shifted towards the step end SD1 in the reversed manner. If considered on the step end SD1, the end EB1, EC1 of a radially outer strip 3B, 3C is shifted towards the step end SD2 from the end EA1, EB1 of the radially inwardly adjacent strip 3A, 3B. If considered on the step end SD2, on the other hand, the end EB2, EA2 of a radially inner strip 3B, 3A is shifted towards the step end SD1 from the end EC2, EB2 of the radially outwardly adjacent strip 3C, 3B. The layered structure It is made one turn, and then the ends EA 1, EB1 and EC1 and the ends EA2, EB2 and EC2 are butt-jointed, respectively. Accordingly, the joints JA, JB and JC thereof are shifted from each other as shown in Fig.2B.

Thus, the circumferential ends E01 and E02 of the layered structure 1t are butt-jointed. In case of another layered structure (1s, 1b), butt-jointing is made in the same way as above.

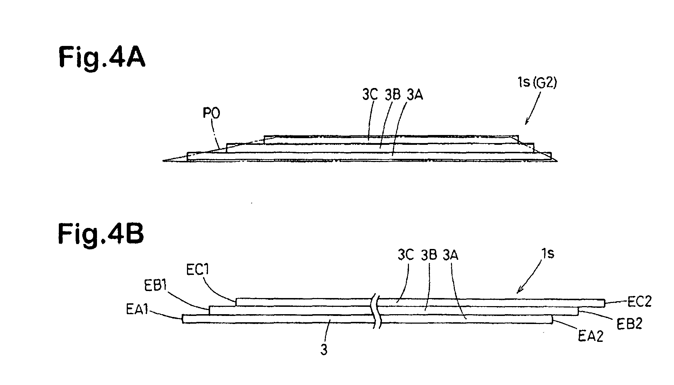

In Fig.4A and Fig.4B a layered structure 1s is wound into the sidewall rubber G2. The layered structure 1s in this example is made up of three unvulcanised rubber strips 3A, 3B and 3C disposed in this order from the radially inside to outside on the tyre building drum. But, in the finished tyre, the strip 3C is axially outermost. The widths WA, WB and WC of the unvulcanised rubber strips 3A, 3B and 3C are gradually decreased such that WA > WB > WC in order to make the cross sectional shape of the layered structure 1s close to a trapezoid P0.

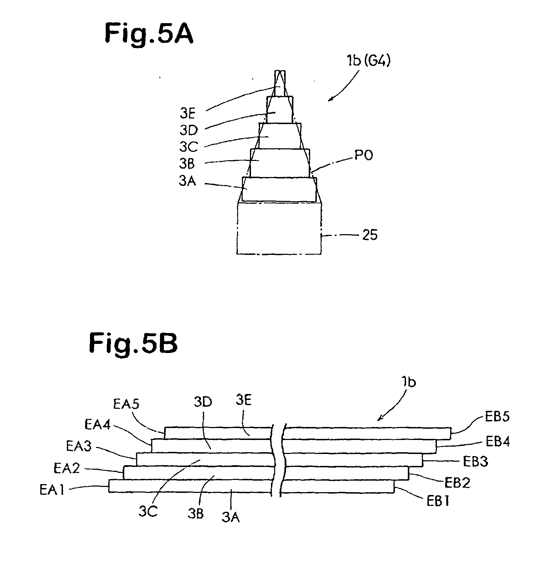

Fig.5A and Fig.5B show a layered structure 1b wound into the bead apex rubber G4. The layered structure 1b is made up of five unvulcanised rubber strips 3A, 3B, 3C, 3D and 3E disposed in this order from the radially inside to outside. The widths of the unvulcanised rubber strips 3A-3E are gradually decreased from the radially inside to the outside in order to make the cross sectional shape of the layered structure 1b close to a triangle P0.

As a matter of course, each of the unvulcanised rubber strips 3 is thinner than the layered structure 1 as whole. Therefore, variation of the thickness and strength in each of the joints J (JA, JB, ---) is greatly decreased. Further, as the positions of the joints J are shifted, any variation is dispersed in the circumferential direction. As a result, the tyre uniformity can be greatly improved.

To maximise this effect of the reduced thickness, the thickness T of each strip 3 is set in a range of not more than 4.0 mm. But, the thickness T should be more than 0.5 mm for the handling, production efficiency, accuracy and the like.

In the case of a tread rubber Gt or a sidewall rubber Gs, the strip thickness T is preferably set in a range of from 0.5 to 2.0 mm in order to minimise a possible influence on the surface of the tyre and tyre performance.

It is preferable that, as shown in Fig.2B, the angular shift (beta) around the tyre axis between the joint JA of the radially innermost strip 3A and the joint JC of the radially outermost strip 3C is not more than 180 degrees, preferably not more than 90 degrees, and the angularly shift (alpha) between the joints J of the adjacent strips 3 is not less than 5 degrees, preferably more than 15 degrees.

If the angular shift (alpha) is less than 5 degrees, the above-mentioned dispersion of the variations becomes insufficient. If the angular shift (beta) is more than 180 degrees, the production efficiency and accuracy are liable to decrease.

In order to improve running performance, durability, weather-resistance and the like, a plurality of unvulcanised rubber strips 3 of a layered structure 1 may include two or more kinds of strips which are different from each other with respect to rubber compound.

In the case of the tread rubber Gt, for example, it is possible to make the innermost strip 3A from a hard rubber compound to improve the tread rigidity. Also, it is possible to make the innermost strip 3A from a low hysteresis loss rubber compound to improve fuel consumption performance, heat generation and the like.

In the case of the sidewall rubber Gs, it is possible to make the axially outermost strip from a hardest rubber compound to improve the cut resistance, or a weatherproof rubber compound.

### Comparison Test 1

Pneumatic tyres of size 195/65R15 were made, wherein the tread rubbers were formed by the layered structures shown in Table 1. The tyres were tested as follows.
1) Radial force variation (RFV) test: The radial force variation was measured with a force variation tester according to the Japanese standard JASO-C607. In Table 1, the average value for fifty sample tiers is shown.
2) Open tread joint (OTJ) test: Using an abrasion tester, the tread portion was worn to the wear indicator. Then, the tyre was checked for crack and separation at the strip joints.

**Table 1**

| Tyre | Ref. | Ex.1 | Ex.2 | Ex.3 | Ex.4 |
|---|---|---|---|---|---|
| Material rubber | | | | | |
| ThicEcness (mm) | 6 | 6 | 6 | 6 | 6 |
| No. of strips | - | 3 | 3 | 3 | 3 |
| Sheet thickness T (mm) | | | | | |
| in/out | - | 2.0/2.0/2.0 | 2.0/2.0/2.0 | 2.0/2.0/2.0 | 2.0/2.0/2.0 |
| Sheet width W (mm) | | | | | |
| in/out | - | 210/200/190 | 210/200/190 | 210/200/190 | 210/200/190 |
| Angularly shift alpha | - | 90 | 45 | 15 | 10 |
| (deg.) | | | | | |
| Angularly shift beta (deg.) | - | 180 | 90 | 30 | 20 |
| RFV in N/cm² (kg.f/sq.cm) | 62(6.3) | 51 (5.2) | 53 (5.4) | 58 (5.9) | 61 (6.2) |
| OTJ(%) | 6 | 0 | 0 | 0 | 0 |

Inner pressure 200 kPa, Tyre load 4,4 kN (450 kgf)

### Comparison Test 2

Pneumatic tyres of size 195/65R15 were made, wherein the sidewall rubbers were formed by the layered structures shown in Table 2. The tyres were checked for joint dent and bulge in the sidewall portions by visual observation and ranked into five ranks, wherein the higher rank number is better.

**Table 2**

| Tyre | Ref. | Ex.1 | Ex.2 | Ex.3 | Ex.4 |
|---|---|---|---|---|---|
| Material rubber | | | | | |
| Thickness (mm) | 6 | 6 | 6 | 6 | 6 |
| No. of strips | - | 3 | 3 | 3 | 3 |
| Sheet thickness T (mm) | | | | | |
| in/out | - | 2.0/2.0/2.0 | 2.0/2.0/2.0 | 2.0/2.0/2.0 | 2.0/2.0/2.0 |
| Sheet width W (mm) | | | | | |
| in/out | - | 120/110/100 | 120/110/100 | 120/110/100 | 120/110/100 |
| Angularly shift alpha | - | 90 | 45 | 15 | 10 |
| (deg.) | | | | | |
| Angularly shift beta (deg.) | - | 180 | 90 | 30 | 20 |
| Bulge/dent | 3 | 5 | 5 | 5 | 4 |

### Comparison Test 3

A thousand pieces of bead apex rubber were made using each of the layered structures shown in Table 3 to obtain the per cent defectives. If the ends in a joint shifted in the widthwise direction more than 3.0 mm and/or a gap was formed between the ends in a joint, then it was judge defective.

**Table 3**

| Bead apex rubber | Ref. | Ex.1 | Ex.2 | Ex.3 | Ex.4 | Ex.5 |
|---|---|---|---|---|---|---|
| Material rubber | | | | | | |
| Thickness (mm) | 20 | 20 | 20 | 20 | 20 | 20 |
| No. of strips | - | 5 | 5 | 5 | 5 | 5 |
| Sheet thickness T (mm) | | | | | | |
| in/out | - | 4/4/4/4/4 | 4/4/4/4/4 | 4/4/4/4/4 | 4/4/4/4/4 | 4/4/4/4/4 |
| Sheet width W (mm) | | | | | | |
| in/out | - | 5/5.5/4/2.5/1 | 5/5.5/4/2.5/1 | 5/5.5/4/2.5/1 | 5/5.5/4/2.5/1 | 5/5.5/4/2.5/1 |
| Angularly shift alpha (deg.) | - | 90 | 45 | 20 | 10 | 5 |
| Angularly shift beta (deg.) | - | 360 | 180 | 80 | 40 | 20 |
| Defective (%) | 3 | 0 | 0 | 0 | 0 | 0 |

As described above, in the present invention, as the unvulcanised rubber strips are thin and the joints are shifted in the circumferential direction, the rubber component is greatly improved in the variations of the thickness and strength, and thus the tyre uniformity, tyre durability and the like can be greatly improved.

## Claims

1. A method of making an annular rubber component (G) of a tyre **characterised by** determining a cross sectional shape of an annular rubber component, allotting thicknesses and widths to unvulcanised rubber strips (3), based on said cross sectional shape of the annular rubber component which is formed by piling up said unvulcanised rubber strips (3), said thicknesses being in a range of from 0.5 to 4.O mm, determining relative displacement of circumferential ends of said unvulcanised rubber strips (3) to each other in the circumferential direction, and winding said unvulcanised rubber strips on a cylindrical surface so that the ends of each said unvulcanised rubber strip are jointed, and the joints of said unvulcanised rubber strips are shifted from each other in the circumferential direction.

2. A method of making a tyre rubber component according to claim 1, **characterised in that** an angular shift (α) between the joints (JC) of the adjacent unvulcanised rubber strips (3) is in a range of not less than 5 degrees, the angular shift (β) between the joint of the radially innermost unvulcanised rubber strip and the joint of the radially outermost unvulcanised rubber strip is not more than 180 degrees.

3. A method of making a tyre rubber component according to claim 1 or 2, **characterised in that** said unvulcanised rubber strips include two or more unvulcanised rubber strips (3) which are different from each other with respect to rubber composition.

4. A method of making a tyre rubber component according to claim 1, 2 or 3, **characterised in that** the tyre rubber component is a tread rubber (G1) or a sidewall rubber (G2), and the thicknesses (TA,TB,TC) of the unvulcanised rubber strips are in a range of from 0.5 to 2.0 mm.

5. A method of making a tyre rubber component according to claim 1, 2 or 3, **characterised in that** the tyre rubber component is a bead apex rubber (G4), and the thicknesses of the unvulcanised rubber strips (3A-3E) are in a range of from 0.5 to 4.0 mm.

6. A method of making a pneumatic tyre comprising an annular rubber component (G), **characterized by** making said annular rubber component (G) according to claim 1.

7. A pneumatic tyre comprising annular rubber components produced by the method according to claim 1, **characterised in that** at least one of the annular rubber components (G) comprises piled-up unvulcanised rubber strips (3) having thicknesses in a range of from 0.5 to 4.0 mm, the ends of the rubber strips (3) being jointed and the joints being shifted from each other in the circumferential direction of the tyre.

## Patentansprüche

1. Verfahren zum Herstellen eines kreisringförmigen Gummibauteils (G), **dadurch gekennzeichnet, dass** eine Querschnittsform eines kreisringförmigen Gummibauteils bestimmt wird, unvulkanisierten Gummistreifen (3) auf der Grundlage der Querschnittsform des kreisringförmigen Gummibauteils, das durch Stapeln der unvulkanisierten Gummistreifen (3) gebildet wird, Dicken und Breiten zugeordnet werden, wobei die Dicken in einem Bereich von 0,5 bis 4,0 mm liegen, eine relative Verschiebung von Umfangsenden der unvulkanisierten Gummistreifen (3) zueinander in der Umfangsrichtung bestimmt wird, und die unvulkanisierten Gummistreifen auf einer zylindrischen Oberfläche gewickelt werden, so dass die Enden eines jeden unvulkanisierten Gummistreifens verbunden werden, und die Verbindungsstellen der unvulkanisierten Gummistreifen voneinander in der Umfangsrichtung verschoben werden.

2. Verfahren zum Herstellen eines Reifengummibauteils nach Anspruch 1, **dadurch gekennzeichnet, dass** eine Winkelverschiebung (α) zwischen den Verbindungsstellen (JC) der benachbarten unvulkanisierten Gummistreifen (3) in einem Bereich von nicht weniger als 5 Grad liegt, wobei die Winkelverschiebung (β) zwischen der Verbindungsstelle des radial innersten unvulkanisierten Gummistreifens und der Verbindungsstelle des radial äußersten unvulkanisierten Gummistreifens nicht größer als 180 Grad ist.

3. Verfahren zum Herstellen eines Reifengummibauteils nach Anspruch 1 oder 2, **dadurch gekennzeichnet, dass** die unvulkanisierten Gummistreifen zwei oder mehr unvulkanisierte Gummistreifen (3) umfassen, deren Gummimischungen sich voneinander unterscheiden.

4. Verfahren zum Herstellen eines Reifengummibauteils nach Anspruch 1, 2 oder 3, **dadurch gekennzeichnet, dass** das Reifengummibauteil ein Laufflächengummi (G1) oder Seitenwandgummi (G2) ist, und dass die Dicken (TA, TB, TC) der unvulkanisierten Gummistreifen in einem Bereich von 0,5 bis 2,0 mm liegen.

5. Verfahren zum Herstellen eines Reifengummibauteils nach Anspruch 1, 2 oder 3, **dadurch gekennzeichnet, dass** das Reifengummibauteil ein Wulstkernreitergummi (G4) ist, und dass die Dicken der unvulkanisierten Gummistreifen (3A - 3E) in einem Bereich von 0,5 bis 4,0 mm liegen.

6. Verfahren zum Herstellen eines Luftreifens, der ein kreisringförmiges Gummibauteil (G) umfasst, **dadurch gekennzeichnet, dass** das kreisringförmige Gummibauteil (G) nach Anspruch 1 hergestellt wird.

7. Luftreifen mit kreisringförmigen Gummibauteilen, die durch das Verfahren nach Anspruch 1 hergestellt sind, **dadurch gekennzeichnet, dass** mindestens eines der kreisringförmigen Gummibauteile (G) gestapelte unvulkanisierte Gummistreifen (3) umfasst, die eine Dicke in einem Bereich von 0,5 bis 4,0 mm aufweisen, wobei die Enden der Gummistreifen (3) verbunden sind und die Verbindungsstellen in der Umfangsrichtung des Reifens voneinander verschoben sind.

## Revendications

1. Procédé de fabrication d'un composant en caoutchouc annulaire (G) d'un bandage pneumatique **caractérisé par** les étapes consistant à déterminer une forme de section transversale d'un composant en caoutchouc annulaire, attribuer des épaisseurs et des largeurs aux bandes de caoutchouc (3) non vulcanisées, en fonction de ladite forme de section transversale du composant en caoutchouc annulaire qui est formée en empilant lesdites bandes de caoutchouc (3) non vulcanisées, lesdites épaisseurs étant de l'ordre de 0,5 à 4,0 mm, déterminer le décalage relatif des extrémités circonférentielles desdites bandes de caoutchouc (3) non vulcanisées les unes par rapport aux autres dans la direction circonférentielle, et enrouler lesdites bandes de caoutchouc non vulcanisées sur une surface cylindrique de sorte que les extrémités de chacune desdites bandes de caoutchouc non vulcanisées sont assemblées, et que les joints desdites bandes de caoutchouc non vulcanisées sont décalés les uns par rapport aux autres dans la direction circonférentielle.

2. Procédé de fabrication d'un composant en caoutchouc de bandage pneumatique selon la revendication 1, **caractérisé en ce qu'**un décalage angulaire (α) entre les joints (JC) des bandes de caoutchouc (3) non vulcanisées adjacentes n'est pas inférieur à 5 degrés, le décalage angulaire (β) entre le joint de la bande de caoutchouc non vulcanisée radialement le plus à l'intérieur et le joint de la bande en caoutchouc non vulcanisée radialement le plus à l'extérieur n'est pas supérieur à 180 degrés.

3. Procédé de fabrication d'un composant en caoutchouc de bandage pneumatique selon la revendication 1 ou 2, **caractérisé en ce que** lesdites bandes de caoutchouc non vulcanisées comprennent deux bandes de caoutchouc (3) non vulcanisées ou plus qui sont différentes les unes des autres du point de vue de la composition de caoutchouc.

4. Procédé de fabrication d'un composant en caoutchouc de bandage pneumatique selon la revendication 1, 2 ou 3, **caractérisé en ce que** le composant en caoutchouc de bandage pneumatique est un caoutchouc de bande de roulement (G1) ou un caoutchouc de paroi latérale (G2) et les épaisseurs (TA, TB, TC) des bandes de caoutchouc non vulcanisées sont de l'ordre de 0,5 à 2,0 mm.

5. Procédé de fabrication d'un composant en caoutchouc de bandage pneumatique selon la revendication 1, 2 ou 3, **caractérisé en ce que** le composant en caoutchouc de bandage pneumatique est un caoutchouc de sommet de talon (G4) et les épaisseurs de bandes en caoutchouc (3A - 3E) non vulcanisées sont de l'ordre de 0,5 à 4,0 mm.

6. Procédé de fabrication d'un bandage pneumatique comprenant un composant en caoutchouc annulaire (G), **caractérisé par** l'étape consistant à fabriquer ledit composant en caoutchouc annulaire (G) selon la revendication 1.

7. Bandage pneumatique comprenant des composants en caoutchouc annulaires produits par le procédé selon la revendication 1, **caractérisé en ce qu'**au moins l'un des composants en caoutchouc annulaires (G) comprend des bandes de caoutchouc (3) non vulcanisées empilées ayant des épaisseurs de l'ordre de 0,5 à 4,0 mm, les extrémités des bandes de caoutchouc (3) étant assemblées et les joints étant décalés les uns des autres dans la direction circonférentielle du bandage.
